# EUROPÄISCHE PATENTSCHRIFT

(11) **EP 1 211 542 B1**
(45) Veröffentlichungstag und Bekanntmachung des Hinweises auf die Patenterteilung: **16.11.2005**
(21) Anmeldenummer: 01121978.9
(22) Anmeldetag: 13.09.2001
(51) Int. Cl.: G02B 21/22, G02B 21/00

(54) **Anordnung zur visuellen und quantitativen 3-D-Untersuchung von Proben**
System for visual and quantitative 3D-inspection of samples
Système d'observation stéreoscopique visuelle et quantitative des échantillons

(30) Priorität: 08.11.2000 DE 10055176
(43) Veröffentlichungstag der Anmeldung: 05.06.2002
(73) Patentinhaber: Leica Microsystems Heidelberg GmbH, 68165 Mannheim (DE)
(72) Erfinder: Engelhardt, Johann, Dr., 76669 Bad Schönborn (DE); Knebel, Werner, Dr., 76709 Kronau (DE)
(74) Vertreter: Reichert, Werner Franz

(56) Entgegenhaltungen:
- EP-A- 0 718 656
- US-A- 5 161 052
- US-A- 5 701 197
- US-A- 5 896 224
- US-A- 6 097 538
- US-B1- 6 191 885

## Beschreibung

Die Erfindung betrifft eine Anordnung zur visuellen und quantitativen 3-D-Untersuchung von Proben.. Im besonderen betrifft die Erfindung ein Stereomikroskop mit einem konfokalen Scanner das parallel die visuelle Untersuchung von Proben als auch die Datenaufnahme mit einem konfokalen Scanner ermöglicht.

Der prinzipielle Aufbau eines Stereomikroskops ist aus der deutschen Geschmacksmusteranmeldung 400 04 640.7 bekannt. Es sind mehrere Ausführungsformen von einem Stereomikroskop vorgestellt. Das Stereomikroskop ermöglicht die visuelle dreidimensionale Betrachtung einer Probe durch den Beobachter. Wird das Bild z.B. mit einer CCD-Kamera aufgenommen so erhält der Betrachter lediglich ein zweidimensionales Bild.

Die deutsche Offenlegungsschrift DE 196 32 637 offenbart ein Verfahren zur Erzeugung parallaktischer Schnittbildstapel für die hochauflösende Stereomikroskopie. Mittels des Verfahrens ist es möglich 3-D-Animationen des räumlichen Objekts durch Generierung einer Serie von Schnittbildstapeln bzw. Schnittbildstapelpaaren zu erzielen. Ein Schnittbildstapel wird dadurch erzielt, indem man den Schärfentiefe-Bereich des Mikroskop-Objektives in diskreten Schritten entlang der optischen Achse durch die Probe führt. So wird ein Schnittbildstapel gewonnen. Aus dem Schnittbildstapel wird jeweils ein parallaktisches Schnittbildstapelpaar gebildet, das dem parallaktischen Winkel für stereoskopisches Sehen entspricht. Die 3-D-Darstellung der Bilder auf einem Display dürfte aber einen erheblichen Rechenaufwand benötigen.

Der prinzipielle Aufbau eines konfokalen Scanmikroskops mit Scaneinrichtung ist aus dem U.S. Patent 4,863,266 bekannt. Das Scanmikroskop erlaubt es die Auflösung und den Kontrast in drei Dimensionen zu erhöhen. Ebenso kann man 3-D-Information von dem Objekt erhalten. Leider erlaubt die Vorrichtung nicht eine visuelle 3-D-Betrachtung der zu untersuchenden Probe.

Der Artikel "Confocal imaging for 3-D digital microscopy" von Kjell Carlsson und Niels Aslund, in Applied optics, Vol. 26(16), pp.3232-3238, behandelt ein Verfahren zur 3-D-Ansicht von Proben mit einem konfokalen Mikroskop. Vor den Scannvorgang kann der Benutzer die Probe mit herkömmlichen mikroskopischen Verfahren betrachten. Für die 3-D-Ansicht werden entlang der optischen Achse mehrere Ebenen in der Probe aufgenommen. Der Stapel digitaler Bilder aus den verschiedenen Ebenen, ergeben eine 3-D-Matrix der Probe. In einem Computer können daran die verschiedensten Prozesse durchgeführt werden. Diese Methode erlaubt ebenfalls nicht eine visuelle 3-D-Beobachtung der Probe und dabei gleichzeitig eine Aufnahme von Probendaten mit einer konfokalen Scaneinrichtung.

Der Erfindung liegt die Aufgabe zugrunde eine Anordnung zu schaffen, die neben einer visuellen 3-D-Betrachtung der Probe eine quantitative 3-D-Analyse der zu untersuchenden Probe ermöglicht. Ferner soll die Erfindung eine 3-D-Darstellung einer Probe mit hoher Qualität ermöglichen und dabei den Rechenaufwand oder andere mathematische Verfahren, die einen erheblichen Zeitaufwand benötigen, zu reduzieren.

Die objektive Aufgabe wird gelöst durch eine Anordnung, wie in den Ansprüchen beschrieben.

Ein.Vorteil der Erfindung ist es, dass mit einem Stereomikroskop sowohl die Visuelle als auch ein konfokales Abrastern der zu untersuchenden Probe ermöglicht ist. Dabei ist es notwendig dass eine konfokale Scaneinrichtung derart mit dem Stereomikroskop verbunden ist, dass ein von der konfokalen Scaneinrichtung definierter Scanstrahlengang eine zu untersuchende Probe abrastert und dabei Daten für eine drei-dimensionale Bilddarstellung der Probe aufnimmt. Dabei kann in der Stereomikroskopie auf die Stereophotographie verzichtet werden, die zwei Abbildungen de Objekts aus unterschiedlichen Blickwinkeln erstellt. Die so erhaltenen dreidimensionalen Bilder besitzen oft enttäuschende Qualität. Ferner sind diese Aufnahmen aufwendig herzustellen und erfordern für die Betrachtung einen erheblichen apparativen Aufwand. Durch die mit einem Stereomikroskop verbundene konfokale Scaneinrichtung kann man nacheinander mehrere Aufnahmen in jeweils verschiedenen Ebenen einer Probe erstellen. Diese Daten werden z.B. in einem Speicher eines Computers abgelegt und können jederzeit für quantitative Auswertungen, wie z.B. Abstandsmessungen im Raum, Teilchen zählen in alle drei Raumrichtungen oder Verteilung bestimmter chemischer Elemente in den drei Raumrichtungen, herangezogen werden. Durch die Erfindung wird die Auswertung zu untersuchender Proben nicht nur vereinfacht, sondern auch hinsichtlich des Ergebnisses deutlich verbessert.

In der Zeichnung ist der Erfindungsgegenstand schematisch dargestellt und wird anhand der Figuren nachfolgend beschrieben. Dabei zeigen:
- Fig. 1: eine schematische Darstellung der Ankopplung der konfokalen Scaneinrichtung durch den Kameraport, und
- Fig. 2: eine schematische Darstellung eines Stereomikroskops, bei dem der Scanstrahlengang direkt in einen Beobachtungsstrahlengang eingekoppelt ist.

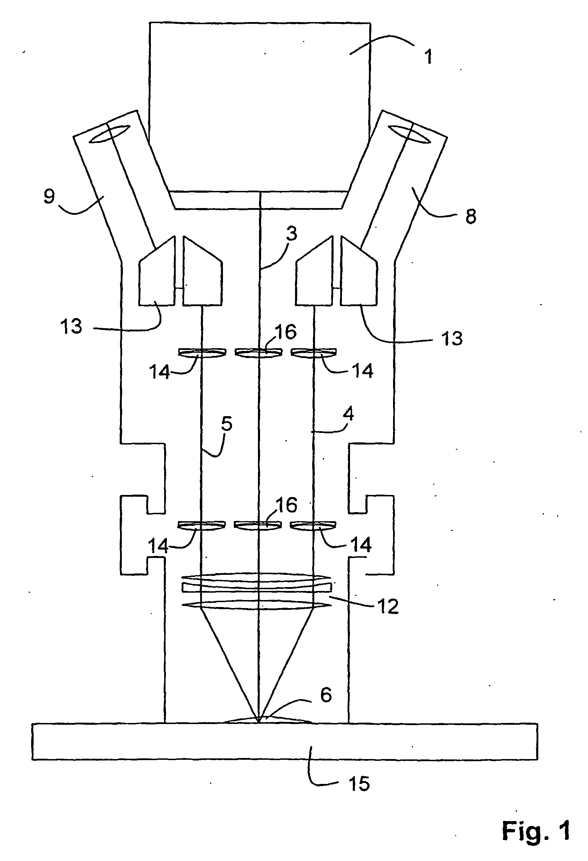

***Fig. 1*** zeigt eine schematische Darstellung der Ankopplung einer konfokalen Scaneinrichtung 1 durch den Kameraport (nicht dargestellt) eines Stereomikroskops 2. Das Stereomikroskop 2 besitzt ein erstes und ein zweites Okular 8 und 9, die beide jeweils im ersten bzw. zweiten Beobachtungsstrahlengang 4 und 5 angeordnet sind. Im Beobachtungsstrahlengang 4 und 5 ist jeweils ein Umlenkprisma 13 eingesetzt, des den Beobachtungsstrahlengang in Stereomikroskop 2 entsprechend führt. Ferner sind in ersten und zweiten Beobachtungsstrahlengang 4 und 5 mehrere Tubuslinsen 14 vorgesehen. Den Tubuslinsen 14 ist ein Objektiv 12 nachgeschaltet, das den ersten und zweiten Beobachtungsstrahlengang 4 und 5 gemeinsam auf eine Probe abbildet 6. Die Probe 6 kann sich z.B. auf einem Objektauflagetisch 15 befinden. Die Scaneinrichtung 1 definiert einen Scanstrahlengang 3, der ebenfalls durch das Objektiv 12 auf die Probe abgebildet wird. Vor dem Objektiv 12 sind im Scanstrahlengang 3 weitere Linsen 16 eingesetzt, die bis zum Objektiv 12 den Scanstrahlengang 3 parallel zum ersten und zweiten Beobachtungsstrahlengang 4 und 5 führen. Ferner ist zu bemerken , dass der Beobachter vor dem von der Probe reflektierten Beleuchtungslaserlicht des Scanstrahls zu schützen ist. Hierzu können z.B. geeignete Filter vorgesehen sein, die den Beobachter vor dem Beobachtungslichtstrahl schützen.

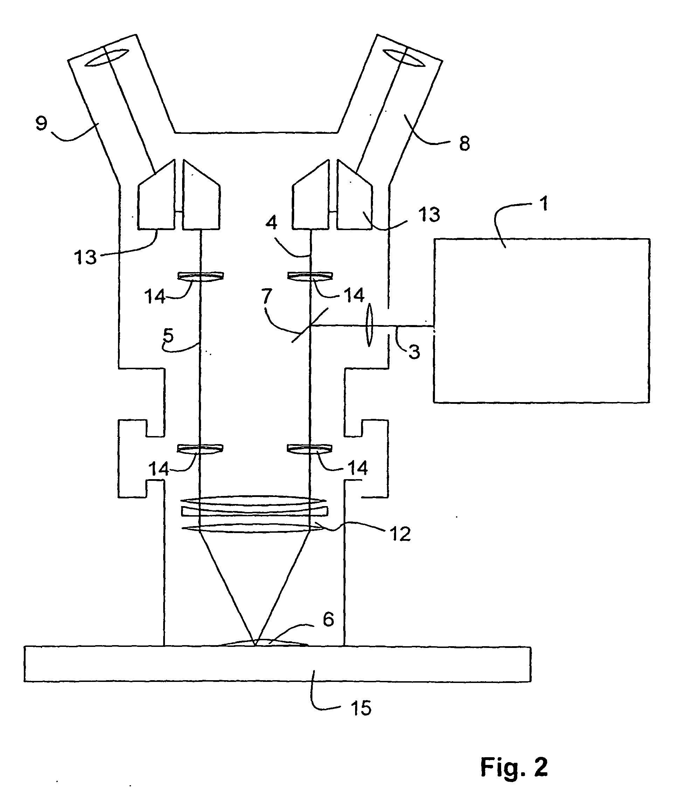

Eine weiter Ausführungsform der Erfindung ist in ***Fig. 2*** dargestellt. Alle Elemente der Fig. 2 die mit den Elementen der Fig. 1 identisch sind, sind mit dem gleichen Bezugszeichen bezeichnet. Die Scaneinrichtung 1 ist in diesem Ausführungsbeispiel derart bezüglich des Scanmikroskops angeordnet, dass der Scanstrahlengang 3 direkt in einen der beiden Beobachtungsstrahlengänge 4 und 5 einkoppelbar ist. Dazu ist in einem der Beobachtungsstrahlengänge 4 oder 5 ein optisches Einkoppelelement 7 vorgesehen, das den Scanstrahlengang 3 in einen Beobachtungsstrahlengang führt. Der Scanstrahlengang 3 passiert dabei ebenfalls mindestens eine der Tubuslinsen 14. Der Scanstrahlengang 3 und die Beleuchtungsstrahlengänge 4 und 5 werden durch das Objektiv 12 auf die Probe 6 abgebildet. Das optische Einkoppelelement 7 ist vergütet, um den Beobachter vor dem von der Probe reflektierten Beleuchtungslaserlicht des Scanstrahls zu schützen.

Die Arbeitsweise und der Aufbau der Scaneinrichtung werden im folgenden nur der Vollständigkeit halber beschrieben, da eine Scaneinrichtung hinlänglich aus den Stand der Technik bekannt ist. In der konfokalen Scanmikroskopie wird eine Probe mit einem Lichtstrahl abgerastert. Ein konfokaler Scanner oder eine Scaneinrichtung umfasst im allgemeinen eine Lichtquelle, ein Fokussieroptik, mit der das Licht der Lichtquelle auf die auf eine Lochblende fokussiert wird, einen Scanmechanismus zur Strahlsteuerung, eine Detektionsblende und Detektoren zum Nachweis des Detektions- und Fluoreszenzlichts. Das Objektiv 12 ist erforderlich, um den Scanstrahl auf die Probe 6 abzubilden. Wie dem Ausführungsbeispiel der Fig. 2 zu entnehmen ist, ist ebenfalls ein optisches Einkoppelelement 7 (Strahlteiler) erforderlich, um den Scanstrahlengang 3 in den Beobachtungsstrahlengang 4 oder 5 einzukoppeln. Der Fokus der Scanstrahls wird im allgemeinen durch Verkippen zweier Spiegel in einer Ebene innerhalb der Probe 6 bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Das von der Probe kommende Fluoreszenz- oder Reflektionslicht gelangt über dieselben Scanspiegel zurück

Die Erfindung wurde in bezug auf eine besondere Ausführungsform wird auf die Detektionsblende fokussiert, hinter der sich Detektoren, meist Photomultiplier, befinden. Detektionslicht, das nicht direkt aus der Fokusregion stammt nimmt einen anderen Lichtweg, und passiert die Detektionsblende nicht, so dass man eine Punktinformation erhält, die durch Abrastern der Probe zu einem dreidimensionalen Bild führt. Schärfentiefeprobleme treten aus prinzipiellen Gründen nicht auf.

Der Scaneinrichtung 1 ist eine entsprechende Elektronik (nicht dargestellt) nachgeschaltet, die die dreidimensionale Abbildung der Probe quantitativ auswertet. Es werden nacheinander mehrere Ebenen in einer Probe gescannt, und die so erhaltenen Stapel werden in entsprechender Weise ausgewertet. Die Auswertung kann z.B. auch mit einen Rechner (nicht dargestellt) und einer entsprechenden Computersoftware realisiert sein.

Es ist jedoch selbstverständlich, dass Änderungen und Abwandlungen durchgeführt werden können, ohne dabei den Schutzbereich der nachstehenden Ansprüche zu verlassen.

## Patentansprüche

1. Anordnung zur visuellen und quantitativen 3-D-Untersuchung von Proben mit einem Stereomikroskop (2), das einen ersten und einen zweiten Beobachtungsstrahlengang (4, 5) definiert und einer konfocalen Scaneinrichtung (1), die mit dem Stereomikroskop (2) verbunden ist, wobei von der konfokalen Scaneinrichtung (1) ein definierter Scanstrahlengang (3) eine zu untersuchende Probe (6) abrastert und dabei Daten für eine dreidimensionale Bilddarstellung der Probe (6) aufnimmt, **dadurch gekennzeichnet, dass** der erste und der zweite Beobachtungsstrahlengang (4, 5) und der Scanstrahlengang (3) durch ein Objektiv (12) des Stereomikroskops (2) gemeinsam auf die zu untersuchende Probe (6) abgebildet sind, sodaß gleichzeitig eine visuelle 3D-Bestrachtung und eine Aufnahme von Probendaten mit der konfokalen Scaneinrichtung möglich ist.

2. Anordnung nach Anspruch 1, **dadurch gekennzeichnet, dass** die konfokale Scaneinrichtung (1) derart an den Stereomikroskop angebracht ist, dass der Scanstrahlengang (3) in den ersten oder in den zweiten Beobachtungsstrahlengang (4, 5) einkoppelbar ist.

3. Anordnung nach Anspruch 2, **dadurch gekennzeichnet, dass** ein optisches Einkoppelelement (7) vorgesehen ist, das den Scanstrahlengang (3) in einen Beobachtungsstrahlengang (4, 5) ein- und auskoppelt.

4. Anordnung nach Anspruch 1, **dadurch gekennzeichnet, dass** das Stereomikroskop mit einem Kameraport versehen ist, an den die konfokale Scaneinrichtung (1) den Scanstrahlengang (3) in das Stereomikroskop einkoppelt.

5. Anordnung nach einem der Ansprüche 1 bis 4, **dadurch gekennzeichnet, dass** die konfokale Scaneinrichtung (1) mit einem Computer verbunden ist, der die durch die konfokale Scaneinrichtung (1) aufgenommenen Bilddaten auswertet und auf einem Display darstellt.

## Claims

1. Arrangement for visual and quantitative 3-D inspection of samples having a stereomicroscope (2) which defines a first and a second observing beam path (4, 5), and a confocal scanning device (1) which is connected to the stereomicroscope (2), a scanning beam path (3) defined by the confocal scanning device (1) scanning a sample (6) to be inspected and data thereby being recorded for three-dimensional imaging of the sample (6), **characterized in that** the first and the second observing beam path (4, 5) and the scanning beam path (3) are jointly projected onto the sample (6) to be inspected by an objective (12) of the stereomicroscope (2), such that visual 3-D observation and recording of sample data are simultaneously possible with the aid of the confocal scanning device.

2. Arrangement according to Claim 1, **characterized in that** the confocal scanning device (1) is fitted on the stereomicroscope in such a way that the scanning beam path (3) can be coupled into the first or into the second observing beam path (4, 5).

3. Arrangement according to Claim 2, **characterized in that** an optical incoupling element (7) is provided which couples the beam path (3) into and out of an observing beam path (4, 5).

4. Arrangement according to Claim 1, **characterized in that** the stereomicroscope is provided with a camera port at which the confocal scanning device (1) couples the scanning beam path (3) into the stereomicroscope.

5. Arrangement according to one of Claims 1 to 4, **characterized in that** the confocal scanning device (1) is connected to a computer which evaluates the image data recorded by the confocal scanning device (1) and displays them on a display.

## Revendications

1. Arrangement d'examen 3D visuel et quantitatif d'échantillons avec un microscope stéréoscopique (2) qui définit un premier et un deuxième trajet de rayon d'observation (4, 5) et un dispositif de balayage à foyer commun (1) qui est relié au microscope stéréoscopique (2), un trajet de rayon de balayage défini (3) provenant du dispositif de balayage à foyer commun (1) quadrillant un échantillon (6) à examiner et enregistrant à cette occasion des données pour une représentation tridimensionnelle de l'échantillon (6), **caractérisé en ce que** le premier et le deuxième trajet de rayon d'observation (4, 5) et le trajet de rayon de balayage (3) sont représentés ensemble sur l'échantillon (6) à examiner par le biais d'un objectif (12) du microscope stéréoscopique (2) de manière à permettre simultanément une observation 3D et un enregistrement des données de l'échantillon avec le dispositif de balayage à foyer commun.

2. Arrangement selon la revendication 1, **caractérisé en ce que** le dispositif de balayage à foyer commun (1) est monté sur le microscope stéréoscopique de telle sorte que le trajet de rayon de balayage (3) peut être injecté dans le premier ou le deuxième trajet de rayon d'observation (4, 5).

3. Arrangement selon la revendication 2, **caractérisé en ce qu'**il est prévu un élément d'injection optique (7) qui injecte et découple le trajet de rayon de balayage (3) dans un trajet de rayon d'observation (4, 5).

4. Arrangement selon la revendication 1, **caractérisé en ce que** le microscope stéréoscopique est muni d'une prise pour caméra par laquelle le dispositif de balayage à foyer commun (1) injecte le trajet de rayon de balayage (3) dans le microscope stéréoscopique.

5. Arrangement selon l'une des revendications 1 à 4, **caractérisé en ce que** le dispositif de balayage à foyer commun (1) est relié à un ordinateur qui analyse les données d'image enregistrées par le dispositif de balayage à foyer commun (1) et les représente sur un écran.
